# EUROPÄISCHE PATENTSCHRIFT

(11) **EP 3 180 534 B1**
(45) Veröffentlichungstag und Bekanntmachung des Hinweises auf die Patenterteilung: **18.03.2020**
(21) Anmeldenummer: 15753313.4
(22) Anmeldetag: 24.07.2015
(51) Int. Cl.: F16D 48/06

(54) **HYDROSTATISCHER KUPPLUNGSAKTOR MIT ÜBERLAUF**
HYDROSTATIC CLUTCH ACTUATOR WITH OVERFLOW
ACTIONNEUR D'EMBRAYAGE HYDROSTATIQUE DOTÉ D'UN TROP-PLEIN

(30) Priorität: 12.08.2014 DE 102014215926
(43) Veröffentlichungstag der Anmeldung: 21.06.2017
(73) Patentinhaber: Schaeffler Technologies AG & Co. KG, 91074 Herzogenaurach (DE)
(72) Erfinder: HÖR, Simon, 77815 Bühl (DE); MÜLLER, Eduard, 77694 Kehl-Auenheim (DE)
(86) Internationale Anmeldenummer: PCT/DE2015/200419
(87) Internationale Veröffentlichungsnummer: WO 2016/023550

(56) Entgegenhaltungen:
- DE-A1- 2 615 986
- DE-A1-102006 053 769
- DE-A1-102007 045 056
- US-A1- 2010 122 887

## Beschreibung

Die Erfindung betrifft einen hydrostatischen Kupplungsaktor für eine Kupplung, insbesondere einer Nasslaufkupplung, eines Kraftfahrzeugs, wobei der Kupplungsaktor eine Antriebseinheit, eine mittels dieser angetriebene Geber-Kolben-Zylindereinheit, ein mit der Geber-Kolben-Zylindereinheit fluidisch verbundenes Hydraulikreservoir sowie ein Hydrauliksystem zur mittelbaren oder unmittelbaren Betätigung der Kupplung aufweist, wobei mittels der Geber-Kolben-Zylindereinheit Hydraulikmedium aus dem Hydraulikreservoir in das Hydrauliksystem förderbar und das Hydrauliksystem druckbeaufschlagbar ist.

Aus dem Stand der Technik sind hydrostatische Kupplungsaktoren bekannt, die ein in sich abgeschlossenes Hydraulikreservoir und damit ein geschlossenes Hydrauliksystem aufweisen. Zum Zwecke eines Druckausgleichs ist in dem Reservoir oder in einem Deckel des Reservoirs in der Regel ein Faltenbalg oder ähnliche Druckausgleichseinheit vorgesehen. Solche bekannten Systeme können unter Umständen den Nachteil aufweisen, dass je nach Geometrie des Faltenbalgs ein Druckausgleich nur eingeschränkt möglich ist. Des Weiteren gelten solche Systeme zwar als geschlossene Systeme, wie jedoch später dargelegt wird, kann es unter bestimmten Umständen zu einem Anwachsen der Hydraulikmediumsmenge im System kommen, was ein Versagen des Aktors zur Folge haben kann.

Die DE 10 2013 204 561 A1 offenbart zum Beispiel ein Druckmittelbetätigungssystem mit einem Betätigungsaktuator mit einem Ausgangselement, das über eine Verbindungsstange mit einem Kolben einer Kolben-Zylindereinheit verbunden ist. Der Kolben ist in dem Zylinder der Kolben-Zylindereinheit axial verlagerbar angeordnet, so dass ein Arbeitsdruckraum im Volumen variiert werden kann, so dass ein Druckmittel aus dem Arbeitsdruckraum über die Verbindungsleitung in einen zweiten Arbeitsdruckraum einer Nehmerzylindereinheit beaufschlagt werden kann, wodurch der Kolben im Zylinder der Kolben-Zylindereinheit in axialer Richtung verlagert wird und über eine Verbindungsstange und einen Hebel oder andere Verbindungselemente beispielsweise eine Kupplung betätigen kann, wie Ein- oder Ausrücken. Die Kolben-Zylindereinheit ist über eine Öffnung und eine Verbindungsleitung mit einem Druckmittelreservoir verbunden. Über diese kann der Arbeitsdruckraum mit dem Reservoir fluidverbunden werden, so dass ein Volumenausgleich stattfinden kann.

Aus einer bislang nicht offengelegten älteren Anmeldung der Anmelderin ist eine hydrostatische Aktuatoranordnung für eine Betätigungseinrichtung bekannt, insbesondere für eine in einem Antriebsstrang eines brennkraftmaschinengetriebenen Kraftfahrzeugs angeordnete Reibungskupplungseinrichtung, wobei die Aktuatoranordnung wenigstens einen elektrischen Rotationsantrieb mit einem Stator und einem Rotor, eine Getriebeeinrichtung zum Wandeln einer rotatorischen in eine translatorische Bewegung mit wenigstens einem Kugelgewindetrieb und wenigstens einen Geberzylinder mit einem axial verlagerbaren Kolben aufweist, wobei der Rotationsantrieb eine Rotationsachse und der Geberzylinder eine Translationsachse aufweist und der Rotationsantrieb mit seiner Rotationsachse und der eine Geberzylinder mit seiner Translationsachse zueinander parallel und voneinander beabstandet angeordnet sind.

Aus einer anderen bislang nicht offengelegten älteren Anmeldung der Anmelderin ist ein hydrostatisches System mit einem Geberzylinder mit einem linear verlagerbaren, einen Druckraum des Geberzylinders variabel begrenzenden Geberzylinderkolben bekannt, sowie einem Nehmerzylinder mit einem einen Druckraum des Nehmerzylinders begrenzenden Nehmerzylinderkolben, einer mit Druckmittel befüllten hydrostatischen Strecke zwischen den Druckräumen, einem mit Druckmittel befüllten Ausgleichsbehälter sowie einer zwischen hydrostatischer Strecke und Ausgleichsbehälter angeordneten, abhängig von einer Position des Geberzylinderkolbens gesteuerten Schnüffelbohrung, wobei eine Steuerung der Schnüffelbohrung außerhalb des Druckraums vorgesehen

Die US 2010/0122887 A1 offenbart einen hydrostatischen Kupplungsaktor mit einem Hydraulikreservoir für eine Nasskupplung.

Bei den vorgenannten Systemen ist es von Nachteil, dass das Hydraulikreservoir jeweils geschlossen ausgebildet ist, so dass für einen Druckausgleich zwischen dem Systeminneren und der Umgebung zu sorgen ist. Dazu genutzte Druckausgleichsvorrichtungen beispielsweise in Form eines im Hydraulikreservoir angeordneten Faltenbalgs erzeugen zusätzlichen Aufwand und Komplexität. Ein anderer Nachteil der genannten geschlossenen Systeme ist, dass kein Austausch bzw. keine Abgabe von Hydraulikmedium aus dem System möglich ist, was insbesondere bei einem hydrostatischen Kupplungsaktor für eine Nasskupplung zu folgender Problematik führen kann:
Bei Nasskupplungen ist das Ausrücksystem (auch als CRS bezeichnet) meist zumindest teilweise innerhalb des Nassraums der Kupplung angeordnet. Entsteht im Ausrücksystem Unterdruck, kann es dazu kommen, dass über Dichtungen, die das Ausrücksystem gegenüber dem Nassraum der Kupplung abdichten, Öl in das Ausrücksystem eingezogen und auf diese Weise dem Hydrauliksystem zwischen dem Ausrücksystem (CRS) und dem Kupplungsaktor (HCA) zugeführt wird. Auf Dauer ist ein Ansteigen des Füllstands des Hydrauliksystems die Folge, insbesondere, wenn das Ausrücksystem regelmäßig und kontinuierlich Öl zieht. Bei einem übermäßigen Ansteigen des Füllstands und damit des Drucks im Hydrauliksystem kann es dazu kommen, dass Dichtungen des Ausrücksystems aufgrund außerplanmäßiger Druckbelastung, bei der Druck von der falschen Seite, nämlich von der Hydraulik zur Kupplung, auf die Dichtungen wirkt, undicht werden und eine gewünschte Betätigung der Kupplung unmöglich wird.

Ausgehend von dem vorgenannten Stand der Technik ist Aufgabe der vorliegenden Erfindung, einen hydrostatischen Kupplungsaktor zu schaffen, der die genannten Nachteile nicht aufweist und bei dem insbesondere ein Ansteigen der Menge des Hydraulikmediums im Hydrauliksystem vermieden werden kann, ohne die Funktion des Kupplungsaktors zu beeinträchtigen.

Diese Aufgabe wird bei einer gattungsgemäßen Kupplung erfindungsgemäß dadurch gelöst, dass das Hydraulikreservoir einen Überlauf aufweist, über den Hydraulikmedium aus dem Hydraulikreservoir und dem Hydrauliksystem entfernbar ist / zu entfernen ist.

Es ist ein besonderer Vorteil der Erfindung, dass das Hydraulikreservoir über den Überlauf offen ist und kein in sich geschlossenes, dichtes System ausbildet, aus dem kein Hydraulikmedium austreten kann. Durch Vorsehen des Überlaufs am Hydraulikreservoir besteht mit besonderem Vorteil eine Möglichkeit, gezielt überschüssiges Medium aus dem Hydrauliksystem abzulassen oder abzuführen. Dies ist insbesondere dann von Vorteil, wenn der Kupplungsaktor mit einer Nasskupplung betrieben wird und es unter Umständen aufgrund von Leckageströmen durch Dichtungen zwischen dem Nassraum der Kupplung und dem Hydrauliksystem des Aktors zu einem Eindringen von Kupplungsöl in das Hydrauliksystem kommt, was ein Anwachsen der Fluidmenge in diesem zur Folge hat. Steigt die Fluidmenge im Hydrauliksystem über einen bestimmten Grenzwert an, kann überschüssiges Fluid über den Überlauf austreten und das Systeme wird stets unterhalb der maximal zulässigen Fluidmenge betrieben. Auf diese Weise kann der Druck im Hydrauliksystem in einfacher und effektiver Weise unterhalb eines kritischen Werts gehalten werden, ab dem Medium durch Dichtungen aus dem Hydrauliksystem zum Beispiel in den Nassraum der Kupplung tritt, was zu einer vorzeitigen Alterung und Undichtigkeit der Dichtungen führe, so dass eine sichere und korrekte Betätigung der Kupplung nicht garantiert wäre.

Anders ausgedrückt ist das Hydrauliksystem des erfindungsgemäßen Kupplungsaktors als offenes System ausgebildet, so dass ein Druckausgleich gegenüber der Umgebung stets automatisch und kontinuierlich abläuft. Gesonderte Einrichtungen zum Bewerkstelligen eines Druckausgleichs sind in vorteilhafter Weise nicht erforderlich, was eine Vereinfachung des Aktors mit allen damit verbundenen Vorteilen wie einfachere Herstellung, geringere Kosten, geringere Teilzahl und einfacherer Wartung zur Folge hat. Im Fall, dass Öl aus dem Nassraum der Kupplung in das Hydrauliksystem des Kupplungsaktors in der zuvor beschriebenen Weise eindringt, bleibt der Druck im hydrostatischen Kupplungsaktor konstant und überschüssiges Öl oder Hydraulikmedium kann über den Überlauf aus den Hydrauliksystem austreten und entfernt werden.

Vorteilhafte Ausführungsformen der Erfindung sind in den Unteransprüchen beansprucht und werden nachfolgend näher erläutert.

Der Überlauf kann insbesondere fluidisch mit einer Einheit verbunden sein, in der über den Überlauf aus dem Hydrauliksystem austretendes Medium aufgefangen und gesammelt und einer Entsorgung oder Wiederverwendung oder ggf. Wiederaufbereitung zugeführt wird. Er kann zum Beispiel mit einem Sammelbehälter, einem Ölsumpf, einem Öltank oder einer ähnlichen Sammeleinheit für Hydraulikmedium verbunden sein, insbesondere mit einem Getriebegehäuse oder dem Nassraum der Kupplung, z.B. der Kupplungsglocke. Aus dem Hydraulikreservoir austretendes Hydraulikmedium kann so einer Folgeverwendung in diesen Einheiten zugeführt werden. Es ist ein weiterer Vorteil, dass aus dem Hydrauliksystem ausgetretenes Medium nicht in die Umwelt gelangt.

Nach einer Ausführungsform kann der Überlauf eine Eintrittsöffnung, durch die Hydraulikmedium aus dem Hydraulikreservoir in den Überlauf strömen kann, und eine Austrittsöffnung, durch die Hydraulikmedium aus dem Überlauf herausströmen kann, aufweisen. Zusätzlich kann der Überlauf einen zwischen Eintrittsöffnung und Austrittsöffnung ausgebildeten rohrförmigen Leitungsabschnitt aufweisen. Durch eine geeignete Gestaltung der Geometrie und Anordnung der Ein- und Austrittsöffnungen sowie des Leitungsabschnitts, zum Beispiel durch einen mäanderförmigen oder labyrinthartigen Verlauf kann das Austreten von Medium aus dem Hydraulikreservoir weitgehend gesteuert werden, so dass stets ein ausreichender Füllstand des Reservoirs sichergestellt ist und nicht zu viel Medium aus dem System austritt. Eine Möglichkeit zur Regulierung der durch den Überlauf austretenden Menge an Hydraulikmedium ist, wenn der rohrartige Leitungsabschnitt bei bestimmungsgemäßer Lage des Hydraulikreservoirs eine zu diesem abfallende Neigung aufweist.

Es ist von besonderem Vorteil, wenn ein Fluss von Hydraulikmedium durch den Überlauf in das Hydraulikreservoir hinein verhindert ist / nicht stattfindet. Dies kann insbesondere dadurch erreicht werden, dass die Eintrittsöffnung bei bestimmungsgemäßer Lage und/oder Anordnung des Kupplungsaktors höher angeordnet ist als der Sammelbehälter, oder anders ausgedrückt auf einem höheren vertikalen Niveau liegend angeordnet ist, oder dass der Überlauf mittels eines Rückschlagventil oder einer ähnlichen Einheit absperrbar ist. So kann einfach und effektiv eine Verunreinigung des im Hydraulikreservoir enthaltenen Mediums vermieden werden.

Wenn die Austrittsöffnung in Form eines Schlauchanschlusses ausgebildet ist, ist ein besonders einfacher Anschluss des Kupplungsaktor nach der Erfindung an periphere Einheiten wie Sammelbehälter etc. möglich.

Der Überlauf kann bei einer Ausführungsform in einen das Hydraulikreservoir verschließenden Deckel integriert sein. Er kann vorzugsweise einteilig mit dem Deckel ausgebildet sein. Bei einer anderen Ausführungsform kann der Überlauf in eine Wand des Hydraulikreservoirs integriert sein. Er kann insbesondere einteilig mit der Wand ausgebildet sein.

Insbesondere im Falle eines Einbahnüberlaufs ist es von Vorteil, wenn das Hydraulikreservoir eine vorzugsweise mit einem Stopfen, insbesondere mit einem Schraubstopfen, verschlossene Füllöffnung aufweist. Ein einfaches Nachfüllen von Hydraulikmedium ist auf diese Weise sichergestellt.

Anders und zusammenfassend ausgedrückt betrifft die Erfindung einen hydrostatischen Kupplungsaktor (HCA) mit einer Überlaufmöglichkeit von Flüssigkeit in einen Ölsumpf oder - tank, ein Getriebegehäuse, eine Kupplungsglocke und/oder ein externes Reservoir. Nach einer Ausführungsform ist in das Reservoirgehäuse direkt ein Schlauchanschluss integriert. Nach einer anderen Ausführungsform ist ein Schlauchanschluss in einen Reservoirdeckel integriert.

Die Erfindung wird nachfolgend mit mehreren Ausführungsbeispielen anhand von Zeichnungen näher erläutert. Dabei zeigen:
- Fig. 1: eine schematische perspektivische Darstellung eines erfindungsgemäßen hydrostatischen Kupplungsaktors in einer ersten Ausführungsform mit zwei elektrischen Rotationsantrieben und zwei Geberzylindern in perspektivischer Ansicht,
- Fig. 2: ein Hydraulikreservoir des Kupplungsaktors der Fig. 1 einzeln in einer perspektivischen Ansicht,
- Fig. 3: ein Hydraulikreservoir des Kupplungsaktors der Fig. 1 einzeln in einem Querschnitt,
- Fig. 4: eine schematische perspektivische Darstellung eines erfindungsgemäßen hydrostatischen Kupplungsaktors in einer zweiten Ausführungsform mit zwei elektrischen Rotationsantrieben und zwei Geberzylindern in perspektivischer Ansicht,
- Fig. 5: ein Hydraulikreservoir des Kupplungsaktors der Fig. 3 einzeln in einer perspektivischen Ansicht und in einem Schnitt, und
- Fig. 6: ein Hydraulikreservoir des Kupplungsaktors der Fig. 1 einzeln in einem Querschnitt.

Die Figuren sind lediglich schematischer Natur und dienen nur dem Verständnis der Erfindung. Die gleichen Elemente sind mit denselben Bezugs-zeichen versehen. Details der unterschiedlichen Ausführungsformen können miteinander kombiniert werden bzw. untereinander ausgetauscht werden.

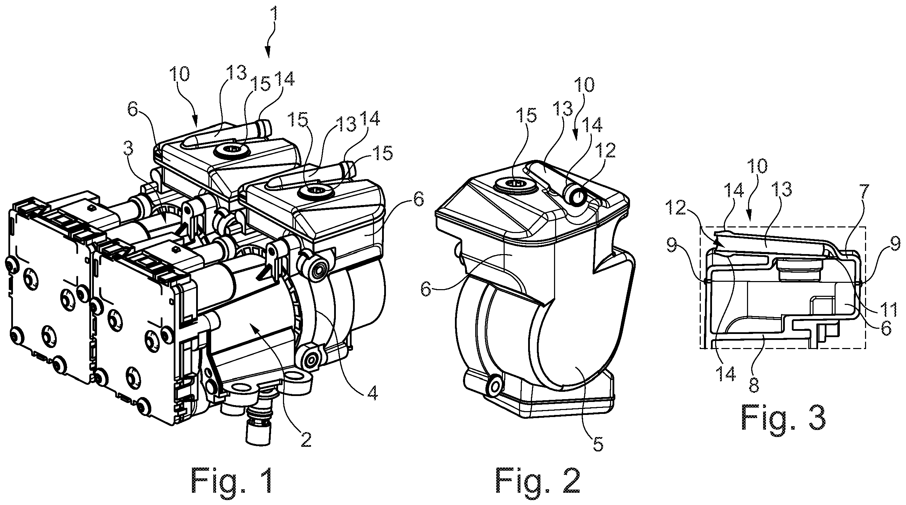

Die Figuren 1 bis 3 zeigen einen hydrostatischen Kupplungsaktor 1 mit zwei elektrischen Antrieben 2, 3 und zwei Geberzylindergehäusen 4, 5 in perspektivischer Ansicht. Das Geberzylindergehäuse 5 wird korrekterweise auch als Abdeckgehäuse bezeichnet und ist de facto unabhängig von dem Geberzylindergehäuse 4. Der Kupplungsaktor 1 dient der Betätigung einer in den Figuren nicht dargestellten Kupplung, beispielsweise einer nasslaufenden Kraftfahrzeug-Doppelkupplung.

In der Regel erfolgt die Betätigung über ein Hydrauliksystem, das auch als hydraulische Strecke bezeichnet wird, und eine ebenfalls in den Figuren nicht dargestellte Betätigungseinrichtung mit zwei Nehmerzylindern. In den Geberzylindergehäusen 3, 4 aufgenommene Geberzylinder sind jeweils mithilfe der hydraulischen Strecke mit einem Nehmerzylinder verbindbar, sodass ausgehend von den Geberzylindern eine hydraulische Leistung auf die Nehmerzylinder übertragbar ist. Die Doppelkupplung weist zwei Anpressplatten auf, die mithilfe der Betätigungseinrichtung, insbesondere der Nehmerzylinder, jeweils zwischen einer eingerückten Betätigungsstellung und einer ausgerückten Betätigungsstellung axial verlagerbar sind.

Die elektrischen Antriebe 2, 3 dienen einem Antrieb der beiden Geberzylinder. Der Antrieb 2 ist funktional dem Geberzylinder in Geberzylindergehäuse 3 zugeordnet. Der Antrieb 3 ist funktional dem Geberzylinder im Geberzylindergehäuse/Abdeckgehäuse 5 zugeordnet. Das Geberzylindergehäuse 5 ist ein "Abdeckgehäuse" o.ä., hierdurch wird die innere Mechanik des Aktors gegen Umgebungseinflüsse geschützt.

Hydraulikmedium für das Hydrauliksystem mit den Geber- und den Nehmerzylindern ist in einem Hydraulikreservoir 6 aufgenommen. Es kann über eine zwischengeschaltete Einheit, beispielsweise in Form eines Regelventils oder eines Steuerventils dem Hydrauliksystem zugeführt und aus dem Hydrauliksystem abgeführt werden.

Das Hydraulikreservoir 6 ist ein Behälter beispielsweise auf Kunststoff oder Metall, vorzugsweise ein Spritzgussbehälter. In den dargestellten Beispielen besitzt er eine Oberschale 7 und eine Unterschale 8, die mittels einer Schweißnaht 9 dicht miteinander verbunden sind. Bei der Ausführungsform der Figuren 1 und 2 ist in die Oberschale 7 ein Überlauf 10 einteilig integriert. Dieser besitzt eine Eintrittsöffnung 11, über die Medium aus dem Hydraulikreservoir 6 in den Überlauf 10 eindringen kann, eine Austrittsöffnung 12, über die Medium aus dem Überlauf 10 austreten kann, und einen zwischen der Eintrittsöffnung 11 und der Austrittsöffnung 12 angeordneten Leitungsabschnitt 13. Dieser ist bei bestimmungsgemäßer Anordnung des Kupplungsaktors 1 leicht in Richtung des Hydraulikreservoirs 6 geneigt. Die Austrittsöffnung 12 ist als Schlauchanschluss mit Verdickungen 14 zum Aufklemmen eines nicht dargestellten Schlauchs ausgebildet, über den aus dem Hydraulikreservoir 6 austretendes Medium einem Sammeltank oder Ölsumpf zugeführt wird. Zum Zwecke einer einfachen Befüllung des Hydraulikreservoirs 6 mit Hydraulikmedium ist in dessen Oberschale 7 eine mit einem Schraubstopfen 15 verschließbare Füllöffnung vorgesehen.

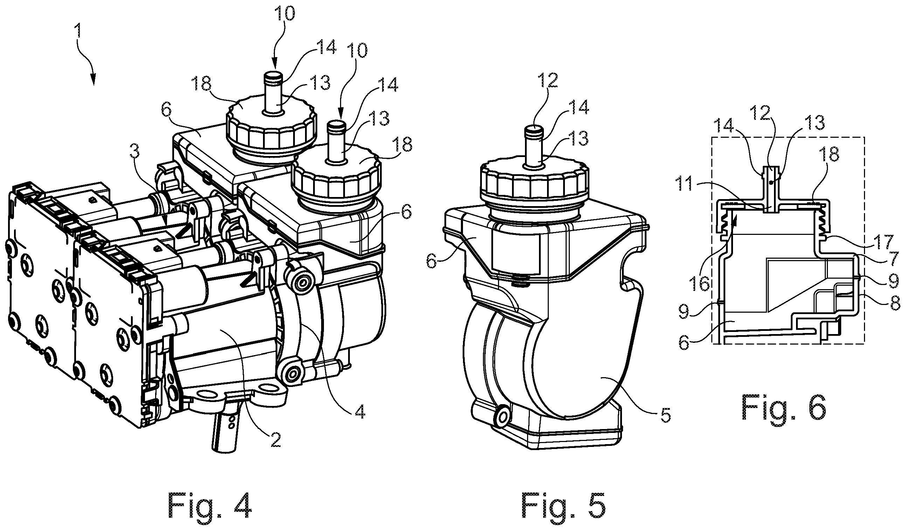

Die Figuren 4 bis 6 zeigen eine andere Ausführungsform der Erfindung, die der Ausführungsform der Figuren 1 und 2 ähnelt, so dass im Folgenden Unterschiede erläutert werden und im Übrigen auf die Beschreibung der Ausführungsform der Figuren 1 und 2 verwiesen wird. Die Oberschale 7 des Hydraulikreservoirs 6 dieser Ausführungsform ist mit einer Füllöffnung 16 ausgebildet. Die diese umgebende Wand der Oberschale 7 ist mit einem Außengewinde 17 versehen, auf das zum Verschließen der Füllöffnung 15 ein Schraubdeckel 18 mit Innengewinde aufgeschraubt ist. In den Schraubdeckel 18 ist mittig der Überlauf 10 eingebracht, bestehen aus dem Leitungsabschnitt 13 mit Eintrittsöffnung 11 und Austrittsöffnung 12. Das austrittsseitige Ende des Leitungsabschnitts 13 ist ebenfalls als Schlauchanschluss mit Verdickungen 14 zum Aufklemmen eines Schlauchs ausgebildet. Bei dieser Ausführungsform ist es von Vorteil, dass eine zusätzliche Füllöffnung nicht erforderlich ist, da eine Befüllung durch Aufschrauben des Deckels 18 über die Füllöffnung 16 erfolgt.

In beiden dargestellten Ausführungsformen liegt der Überlauf 10 möglichst hoch im Hydraulikreservoir. Er dient sowohl einem Austritt von überschüssigem Medium aus dem Hydraulikreservoir 6 als auch einer Be- und Entlüftung des Hydrauliksystem bei Druckschwankungen.

### Bezugszeichenliste

- 1: Kupplungsaktor
- 2: Antrieb
- 3: Antrieb
- 4: Geberzylindergehäuse
- 5: Geberzylindergehäuse/Abdeckgehäuse
- 6: Hydraulikreservoir
- 7: Oberschale
- 8: Unterschale
- 9: Schweißnaht
- 10: Überlauf
- 11: Eintrittsöffnung
- 12: Austrittsöffnung
- 13: Leitungsabschnitt
- 14: Verdickungen
- 15: Schraubstopfen
- 16: Füllöffnung
- 17: Außengewinde
- 18: Schraubdeckel

## Patentansprüche

1. Hydrostatischer Kupplungsaktor (1) für eine Kupplung eines Kraftfahrzeugs, wobei der Kupplungsaktor (1) eine Antriebseinheit (2, 3), eine mittels dieser angetriebene Geber-Kolben-Zylindereinheit (4, 5), ein mit der Geber-Kolben-Zylindereinheit fluidisch verbundenes Hydraulikreservoir (6) sowie ein Hydrauliksystem zur Betätigung der Kupplung aufweist, wobei mittels der Geber-Kolben-Zylindereinheit (4, 5) Hydraulikmedium aus dem Hydraulikreservoir (6) in das Hydrauliksystem förderbar und das Hydrauliksystem druckbeaufschlagbar ist, **dadurch gekennzeichnet, dass** das Hydraulikreservoir (6) einen Überlauf (10) aufweist, über den Hydraulikmedium aus dem Hydraulikreservoir (6) und dem Hydrauliksystem entfernbar ist.

2. Hydrostatischer Kupplungsaktor (1) nach Anspruch 1, **dadurch gekennzeichnet, dass** der Überlauf (10) fluidisch mit einem Sammelbehälter verbunden ist.

3. Hydrostatischer Kupplungsaktor (1) nach Anspruch 1 oder 2, **dadurch gekennzeichnet, dass** der Überlauf (10) derart ausgebildet ist, dass ein Fluss von Hydraulikmedium durch den Überlauf (10) in das Hydraulikreservoir (6) hinein verhindert ist.

4. Hydrostatischer Kupplungsaktor (1) nach einem der vorstehenden Ansprüche, **dadurch gekennzeichnet, dass** der Überlauf (10) eine Eintrittsöffnung (11) aufweist, die zum Hindurchleiten von Hydraulikmedium aus dem Hydraulikreservoir (6) in den Überlauf (10) ausgebildet ist, und der Überlauf (10) eine Austrittsöffnung (12) aufweist, die zum Herausströmenlassen von Hydraulikmedium aus dem Überlauf (10) vorbereitet ist.

5. Hydrostatischer Kupplungsaktor (1) nach Anspruch 4, **dadurch gekennzeichnet, dass** die Eintrittsöffnung (11) bei bestimmungsgemäßer Lage und/oder Anordnung des Kupplungsaktors (1) höher angeordnet ist, als der Sammelbehälter oder dass der Überlauf (10) mittels eines Rückschlagventil absperrbar ist.

6. Hydrostatischer Kupplungsaktor (1) nach Anspruch 4 oder 5, **dadurch gekennzeichnet, dass** die Austrittsöffnung (12) in Form eines Schlauchanschlusses (14) ausgebildet ist.

7. Hydrostatischer Kupplungsaktor (1) nach einem der Ansprüche 4 bis 6, **dadurch gekennzeichnet, dass** ein zwischen der Eintrittsöffnung (11) und der Austrittsöffnung (12) ausgebildeter rohrförmiger Leitungsabschnitt (13) bei bestimmungsgemäßer Lage des Hydraulikreservoirs (6) eine zu diesem abfallende Neigung aufweist.

8. Hydrostatischer Kupplungsaktor (1) nach einem der vorstehenden Ansprüche, **dadurch gekennzeichnet, dass** der Überlauf (10) in einen das Hydraulikreservoir (6) verschließenden Deckel (18) integriert ist.

9. Hydrostatischer Kupplungsaktor (1) nach einem der vorstehenden Ansprüche, **dadurch gekennzeichnet, dass** der Überlauf (10) in eine Wand des Hydraulikreservoirs (6) integriert ist.

10. Hydrostatischer Kupplungsaktor (1) nach einem der vorstehenden Ansprüche, **dadurch gekennzeichnet, dass** das Hydraulikreservoir (6) eine Füllöffnung (16) aufweist.

## Claims

1. A hydrostatic clutch actuator (1) for a clutch of a motor vehicle, the clutch actuator (1) comprising a drive unit (2, 3), a pick-up piston cylinder unit (4, 5) driven by the latter, a hydraulic reservoir (6) fluidly connected to the pick-up piston cylinder unit and a hydraulic system for actuating the clutch, wherein, by means of the pick-up piston cylinder unit (4, 5), hydraulic medium can be conveyed from the hydraulic reservoir (6) into the hydraulic system and the hydraulic system can be pressurised, **characterised in that** the hydraulic reservoir (6) has an overflow (10) via which hydraulic medium can be removed from the hydraulic reservoir (6) and the hydraulic system.

2. The hydrostatic clutch actuator (1) according to claim 1, **characterised in that** the overflow (10) is fluidly connected to a collecting tank.

3. The hydrostatic clutch actuator (1) according to claim 1 or 2, **characterised in that** the overflow (10) is designed such that a flow of hydraulic medium through the overflow (10) into the hydraulic reservoir (6) is prevented.

4. The hydrostatic clutch actuator (1) according to any one of the preceding claims, **characterised in that** the overflow (10) has an inlet opening (11) which is designed for passing hydraulic medium from the hydraulic reservoir (6) into the overflow (10), and that the overflow (10) has an outlet opening (12) which is provided to allow for the outflow of hydraulic medium from the overflow (10).

5. The hydrostatic clutch actuator (1) according to claim 4, **characterised in that** the inlet opening (11) is arranged, in the intended position and/or arrangement of the clutch actuator (1), to be higher than the collecting container, or that the overflow (10) can be shut off by means of a check valve.

6. The hydrostatic clutch actuator (1) according to claim 4 or 5, **characterised in that** the outlet opening (12) is formed in the form of a hose connection (14).

7. The hydrostatic clutch actuator (1) according to any one of claims 4 through 6, **characterised in that** a tubular line portion (13) formed between the inlet opening (11) and the outlet opening (12) has a gradient sloping towards the hydraulic reservoir (6) when same is in the intended position.

8. The hydrostatic clutch actuator (1) according to any one of the preceding claims, **characterised in that** the overflow (10) is integrated into a cover (18) which closes the hydraulic reservoir (6).

9. The hydrostatic clutch actuator (1) according to any one of the preceding claims, **characterised in that** the overflow (10) is integrated into a wall of the hydraulic reservoir (6).

10. The hydrostatic clutch actuator (1) according to any one of the preceding claims, **characterised in that** the hydraulic reservoir (6) has a filling opening (16).

## Revendications

1. Actionneur d'embrayage hydrostatique (1) pour embrayage de véhicule automobile, l'actionneur d'embrayage (1) comprenant une unité d'entraînement (2, 3), une unité piston-cylindre émettrice (4, 5) entraînée par celle-ci, un réservoir hydraulique (6) en communication fluidique avec l'unité cylindre-piston émettrice, ainsi qu'un système hydraulique pour l'actionnement de l'embrayage, au moyen de l'unité piston-cylindre émettrice (4, 5), le milieu hydraulique pouvant être transporté du réservoir hydraulique (6) dans le système hydraulique et le système hydraulique étant mis sous pression, **caractérisé en ce que** le réservoir hydraulique (6) présente un trop-plein (10) par lequel le fluide hydraulique peut être éliminé du réservoir hydraulique (6) et du système hydraulique.

2. Actionneur d'embrayage hydrostatique (1) selon la revendication 1, **caractérisé en ce que** le trop-plein (10) est en communication fluidique avec un récipient collecteur.

3. Actionneur d'embrayage hydrostatique (1) selon la revendication 1 ou 2, **caractérisé en ce que** le trop-plein (10) est conçu de manière à rendre impossible l'écoulement du fluide hydraulique à travers le trop-plein (10) dans le réservoir hydraulique (6).

4. Actionneur d'embrayage hydrostatique (1) selon l'une des revendications précédentes, **caractérisé en ce que** le trop-plein (10) présente un orifice d'entrée (11) conçu pour faire passer le fluide hydraulique du réservoir hydraulique (6) dans le trop-plein (10) et le trop-plein (10) présente un orifice de sortie (12) qui est préparée pour faire sortir le fluide hydraulique du trop-plein (10).

5. Actionneur d'embrayage hydrostatique (1) selon la revendication 4, **caractérisé en ce que** l'orifice d'entrée (11) est ménagé plus haut, dans la position et/ou l'agencement conforme à l'usage de l'actionneur d'embrayage (1), que le récipient collecteur ou **en ce que** le trop-plein (10) peut être obturé au moyen d'un clapet anti-retour.

6. Actionneur d'embrayage hydrostatique (1) selon la revendication 4 ou 5, **caractérisé en ce que** l'orifice de sortie (12) se présente sous la forme d'un raccord de tuyau (14).

7. Actionneur d'embrayage hydrostatique (1) selon l'une des revendications 4 à 6, **caractérisé en ce qu'**une partie de conduite tubulaire (13) formée entre l'orifice d'entrée (11) et l'orifice de sortie (12) présente une inclinaison jusqu'au réservoir dans la position conforme à l'usage du réservoir hydraulique (6).

8. Actionneur d'embrayage hydrostatique (1) selon l'une des revendications précédentes, **caractérisé en ce que** le trop-plein (10) est intégré dans un couvercle (18) qui ferme le réservoir hydraulique (6).

9. Actionneur d'embrayage hydrostatique (1) selon l'une des revendications précédentes, **caractérisé en ce que** le trop-plein (10) est intégré dans une paroi du réservoir hydraulique (6).

10. Actionneur d'embrayage hydrostatique (1) selon l'une des revendications précédentes, **caractérisé en ce que** le réservoir hydraulique (6) présente un orifice de remplissage (16).
